# EUROPEAN PATENT APPLICATION

(11) **EP 1 959 297 A1**
(43) Date of publication of application: **20.08.2008**
(21) Application number: 08101017.5
(22) Date of filing: 28.01.2008
(51) Int. Cl.: G03B 21/28

(54) **Image Projecting Apparatus**

(30) Priority: 15.02.2007 TW 96203037 U
(71) Applicant: Hocheng Corporation, Taipei 104 (TW)
(72) Inventor: LIN, Chun-Hui, 104, Taipei (TW)
(74) Representative: Beck & Rössig European Patent Attorneys

(57) **Abstract**

A projector uses a reflecting device. The reflecting device is so freely moved by a controller to change its reflecting angle. By using the reflecting device, an image is able to be reflected to a requested position.

## Description

### Field of the invention

The present invention relates to a projector; more particularly, relates to projecting an image to a requested position.

### Description of the Related Art

A projector is usually connected with a cable line or directly with an audio-video device to project image.

Although the above device project image, a position for projecting the image is selected in advance and then the device is fixed at a proper position, which makes it hard to change the position for projecting the image. On changing the position for projecting the image, the projector is uninstalled at first. After the position for projecting the image is confirmed, the projector is reinstalled and fixed at a required position. All these steps compose a complex procedure. Hence, the prior art does not fulfill users' requests on actual use.

### Summary of the invention

The main purpose of the present invention is to project an image to a requested position by a reflecting device.

To achieve the above purpose, the present invention is an image projecting apparatus, comprising a projecting device; and a reflecting device corresponding to the projecting device, comprising a tuning unit; a reflecting unit connected with the tuning unit at an end of the tuning unit; and a control unit connected with the tuning unit, where the tuning unit comprises a first moving arm and a second moving arm to freely change a reflecting angle of the reflecting unit. Accordingly, a novel image projecting apparatus is obtained.

### Brief descriptions of the drawings

The present invention will be better understood from the following detailed descriptions of the preferred embodiments according to the present invention, taken in conjunction with the accompanying drawings, in which
FIG.1 is the perspective view showing the first preferred embodiment according to the present invention;
FIG.2 is the view showing the first state of use of the first preferred embodiment;
FIG.3 is the view showing the second state of use of the first preferred embodiment;
FIG.4 is the view showing the third state of use of the first preferred embodiment; and
FIG.5 is the perspective view showing the second preferred embodiment.

### Descriptions of the preferred embodiments

The following descriptions of the preferred embodiments are provided to understand the features and the structures of the present invention.

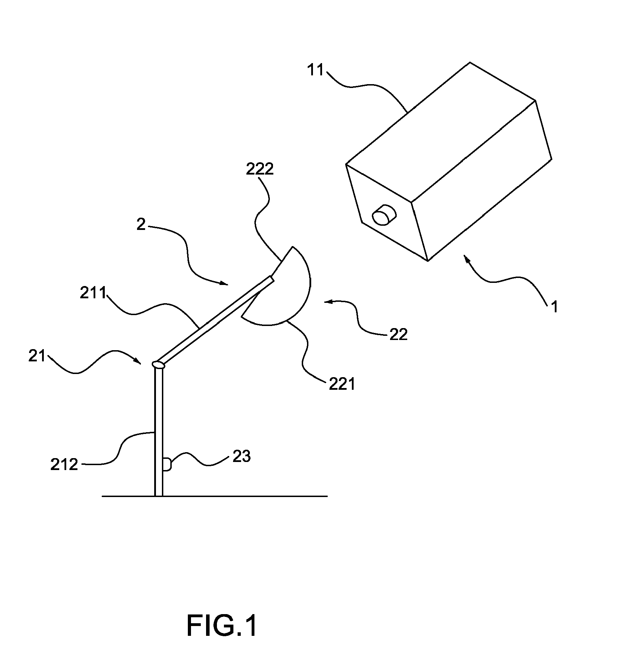

Please refer to FIG.1, which is a perspective view showing a first preferred embodiment according to the present invention. As shown in the figure, the present invention is an image projecting apparatus, comprising a projecting device 1 and a reflecting device 2, where an image projected from the projecting device 1 is reflected to a requested position by the reflecting device 2.

The projecting device 1 has an image output unit 11 corresponding to the reflecting device 2.

The reflecting device 2 corresponding to the projecting device 1 comprises a tuning unit 21; a reflecting unit 22 connected with an end of the tuning unit 21; and a control unit 23 connected with the tuning unit 21, where the tuning unit 21 comprises a first moving arm 211 connected with the reflecting unit 22; and a second moving arm 212 connected with the first moving arm 211. The reflecting unit 22 has a convex surface 221 at a direction and a concave surface 222 at another direction. Thus, a novel image projecting apparatus is obtained.

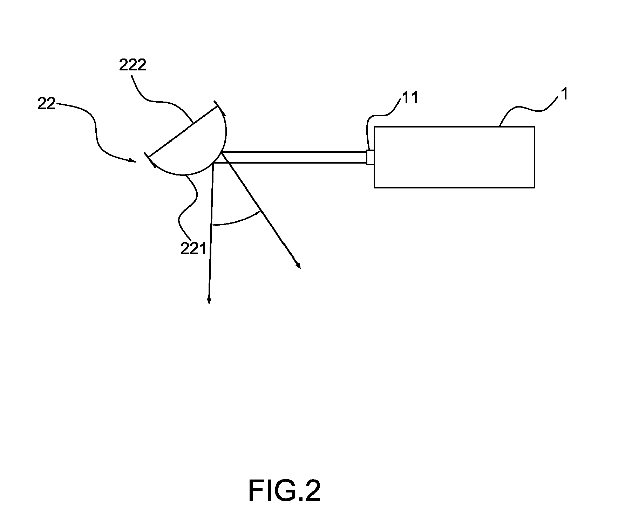

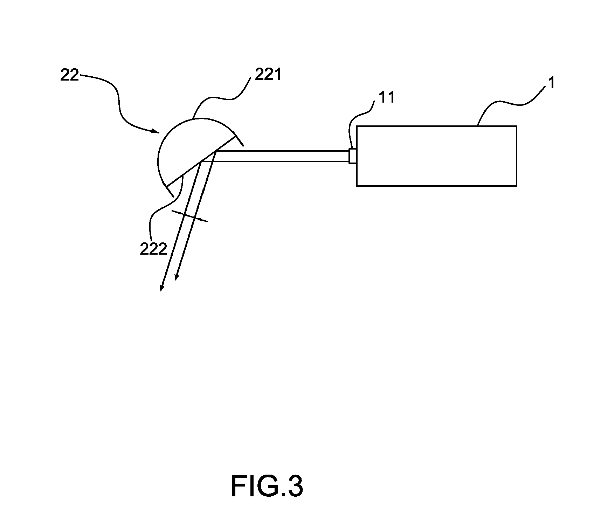

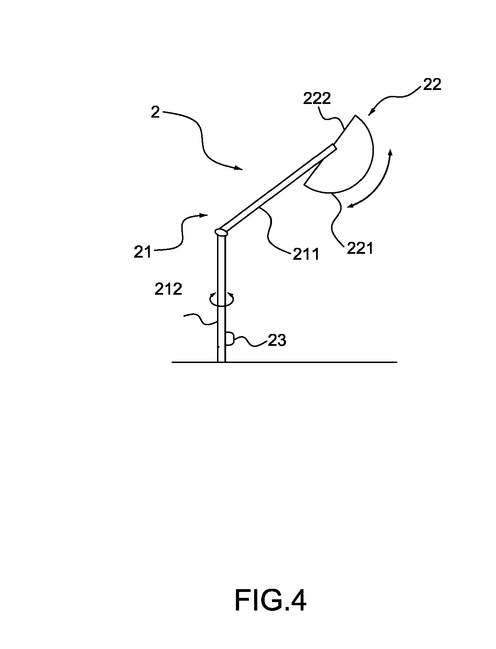

Please refer to FIG.2 to FIG.4, which are views showing a first, a second and a third states of use of the first preferred embodiment. As shown in the figures, when using the present invention, an image from an image output unit 11 of a projecting device is transmitted to a reflecting unit 22 of a reflecting device 2 to be reflected by the reflecting unit 22. The image is reflected by a convex surface 221 of the reflecting unit 22 or a concave surface 222 of the reflecting unit 22, which is corresponding to the image output unit 11 of the projecting device 1. A first moving arm 211 and a second moving arm 212 is moved and turned by a control unit 23 to change a vertical angle of the first moving arm 211 and a horizontal angle of the second moving arm 212 respectively, so that a reflection angle of the reflecting unit 22 is changed. Or, the reflecting unit 22 is adjusted directly to change the reflection angle of the reflecting unit 22. Thus, the image is reflected to a requested position by the reflecting unit 22.

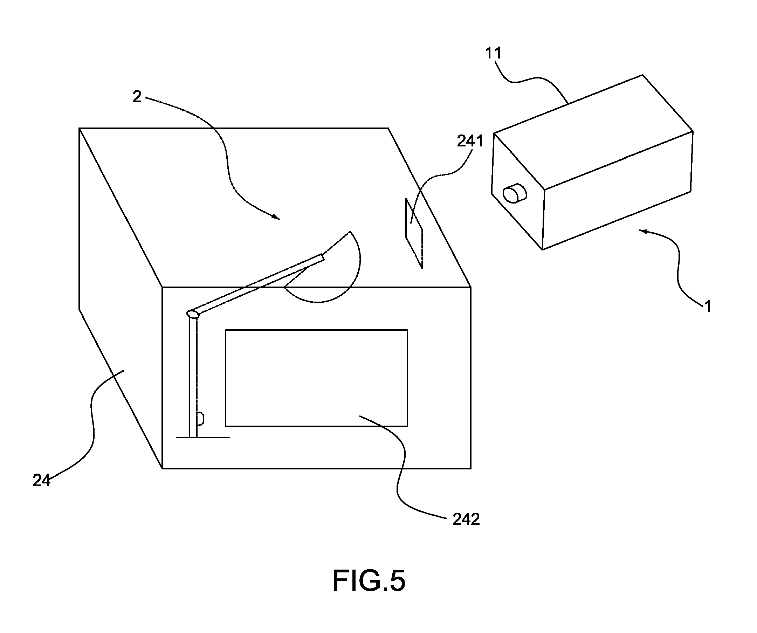

Please refer to FIG.5, which is a perspective view showing a second preferred embodiment. As shown in the figure, a reflecting device 2 according to the present invention further has a case 24 for containing a tuning unit 21, a reflecting unit 22 and a control unit 23. The case 24 has an input window 241 and an output window 242. An image output unit 11 of a projecting device 1 is corresponding to the input window 241 through which an image from the projecting device 1 is transmitted to a reflecting unit 22 of a reflecting device 2. And then the image is reflected by the reflecting unit 22 to be outputted through the output window 242.

To sum up, the present invention is an image projecting apparatus, where a reflecting device is used in a projecting device to project an image to a requested position.

The preferred embodiments herein disclosed are not intended to unnecessarily limit the scope of the invention. Therefore, simple modifications or variations belonging to the equivalent of the scope of the claims and the instructions disclosed herein for a patent are all within the scope of the present invention.

## Claims

1. An image projecting apparatus, comprising:
a projecting device (1); and
a reflecting device (2) located at a position corresponding to said projecting device, said reflecting device comprising
a tuning unit (21);
a reflecting unit (22) that is movably connected with said tuning unit at an end of said tuning unit; and
a control unit (23) that is connected with said tuning unit.

2. The apparatus according to claim 1,
wherein said reflecting device (2) has a case to contain said tuning unit, said reflecting unit and said control unit;
wherein said case has an input window (241) and an output window (242);
wherein said input window is corresponding to said projecting device to transmit an image outputted from said projecting device to said reflecting unit of said reflecting device.

3. The apparatus according to claim 1 or 2,
wherein said tuning unit (21) comprises a first moving arm (211) connected with said reflecting unit, and a second moving arm (212) connected with said first moving arm; and
wherein an image outputted from said projecting device is reflected by said reflecting unit to a requested position through changing a vertical angle of said first moving arm and a horizontal angle of said second moving arm.

4. The apparatus according to one of claims 1 to 3,
herein said reflecting unit has a convex surface (221) at a direction and a concave surface (222) at another direction.
